## Europäisches Patentamt
## European Patent Office
## Office européen des brevets

(11) Publication number: **0 172 027 B1**

(12) **EUROPEAN PATENT SPECIFICATION**

(45) Date of publication of patent specification: **26.10.88**

(51) Int. Cl.⁴: **B 65 G 15/64**

(21) Application number: **85305786.7**

(22) Date of filing: **14.08.85**

(54) Belt guidance arrangement for conveyor system.

(30) Priority: **14.08.84 US 640749**
**13.11.84 US 670563**
**22.07.85 US 757852**

(43) Date of publication of application:
**19.02.86 Bulletin 86/08**

(45) Publication of the grant of the patent:
**26.10.88 Bulletin 88/43**

(84) Designated Contracting States:
**BE CH DE FR GB IT LI NL SE**

(56) References cited:
**DE-C- 621 342**
**US-A-2 725 757**
**US-A-3 715 027**

(73) Proprietor: **Mraz, Dennis**
**410 Jessop Avenue**
**Saskatoon Saskatchewan (CA)**

(72) Inventor: **Mraz, Dennis**
**410 Jessop Avenue**
**Saskatoon Saskatchewan (CA)**

(74) Representative: **Smith, Philip Antony et al**
**REDDIE & GROSE 16 Theobalds Road**
**London WC1X 8PL (GB)**

Courier Press, Leamington Spa, England.

## Description

This invention relates to a belt guidance arrangement for use in a conveyor system, such as those used in mining operations.

In mining operations, for example, a mining machine is situated at the mine face and such machine may be expected to mine an arcuate surface of the face, rather than a narrow straight-ahead surface, and feed its output to a first conveyor stretch directly behind it. Of course, as the mining machine traverses its arcuate path, the first conveyor stretch must follow it and, since such first conveyor stretch must feed its output to a following second stretched of conveyor which has to be maintained in a more or less constant orientation relative to the face, a problem arises as to the minimization of side slippage and wear on the belt as the first conveyor stretch is swung to different positions relative to the second stretch and is expected to continue its normal function.

Indeed, problems are encountered in all situations, i.e. refuse spreading by belt conveyor arrangements, where belt conveyors have to assume a "dog-leg" configuration, particularly configurations of continuously variable angle.

Belt conveying has not generally been considered practical for open pit mines which are either irregulator or confined in shape or having relatively steep wall angles, even though costs in many cases could be better than conventional truck haulage.

Optimal overland belt conveyor routes often encounter local natural obstacles such as mountains or bodies of water. The solution usually requires expensive excavation and/or foundation works which reduces the desirability of the technology.

It is the object of the present invention to solve the afore-mentioned problems.

According to the present invention there is provided, a belt guidance arrangement comprising upper and lower pairs of belt bending rollers, an endless belt wrapped over said pairs of rollers, one of each of the pairs of rollers being mounted on a first, static frame and the other of each of the pairs of rollers being mounted on a second frame swingable horizontally with respect to the first frame, means to vary the distance between the external roller surfaces of the rollers of each pair, longitudinally of the direction of movement of the endless belt to compensate for relative swinging movement of the rollers in each pair by balancing the sum of the transverse components of the tension forces in the belt on the left hand side of a belt with the sum of the transverse components of the tension forces in the belt on the right hand side of the belt.

According to one preferred form of the invention the means to vary the distance between the external roller surfaces of the rollers of each pair comprises means for mounting at least each said one or each said other of the pairs of rollers for adjustable movement longitudinally of the direction of movement of the belt, and means for adjustment of the movable rollers.

Problems addressed by the present invention are the avoidance of undue stress upon the belt resulting from relative swinging movement and the maintenance of belt alignment and training of the belt in passing through the rollers.

According to one preferred feature of the invention, one or both of the rollers of each pair is a convex roller having a maximum diameter to minimum diameter ratio of about 3:1 and a roller length to maximum diameter of about 5:1.

It is preferred that the means for movable roller adjustment are adapted to adjust each roller of each pair by an equal amount towards or away from each other.

Conveniently the static frame and the second frame are constructed as a unit and are mounted for movements as a unit.

Description of drawings

Certain embodiments of the present invention will now be described by way of example, with reference to the accompanying drawings, wherein:

Figure 1 is a side elevation of a system embodying the present invention;

Figure 2 is a plan view of part of the system shown in Figure 1;

Figure 3 is a detail plan view of the transition between the first and second stretches of the conveyor belt;

Figure 4 is a side view corresponding to Figure 3;

Figure 5 is a side view of one set of rollers used in guiding and bending the conveyor belt;

Figure 6 is a plan view corresponding to Figure 5;

Figure 6a is a detail partly in section of a segmented roller configuration;

Figure 7 is a cross-sectional detail of an alternative embodiment showing a conical roller of varying conicity;

Figure 8 is a detail end elevation of the roller of Figure 7;

Figure 9 is a schematic showing a pair of rollers according to Figure 7;

Figure 10 is a detail similar to Figure 7 but with the cone shape more pronounced;

Figure 11 is detail of another embodiment of the invention showing a roller of similar shape to those of Figures 3 and 4;

Figures 12, 13 and 14 are examples of various systems embodying the present invention;

Figure 15 is a schematic representation of the invention in use in a constricted open pit;

Figure 16 is a schematic side elevation of the invention configured for a low headroom application;

Figure 17 is a schematic side elevation of a system embodying the invention, conveying in the reverse direction to that of Figure 1;

Figure 18 is a schematic side elevation of a system embodying the invention arranged for conveying material in both directions simultaneously;

Figures 19 and 20 are schematic side elevation and plan view of an arrangement similar to Figures 1 and 2 but with a further swingable frame;

Figure 21 is a view similar to Figure 1 but with modifications for the transfer of material and for the mounting of the belt bending device;

Figure 22 is a plan view of the device seen in Figure 21;

Figure 23 is a schematic side elevation of an embodiment similar to Figure 19 but for operation in a low head room situation and incorporating some of the other modifications seen in Figure 21;

Figure 24 is a plan view of the configuration seen in Figure 23;

Figure 25 is a view of a configuration similar to Figure 23 but with an additional feed from a ground loop being provided via a trip car; and

Figure 26 is a plan view of the configuration shown in Figure 25.

Description of the drawings

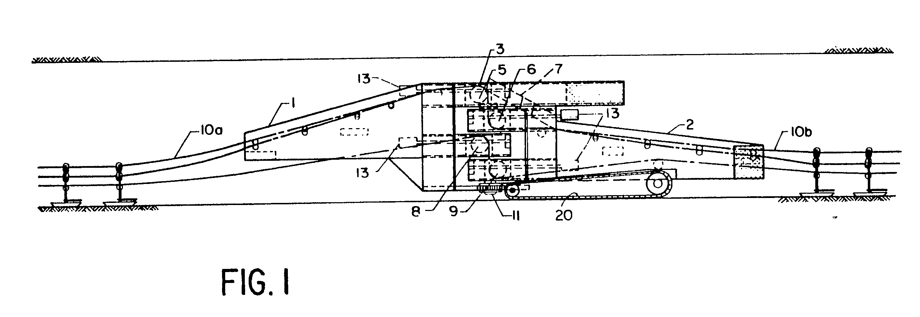

Referring now to Figure 1, there is shown a system including a first part 1 which is adapted to be connected to and collect output from, say, a face mining machine, a shovel and crusher combination, or other device, and deliver such output to a second part 2 for delivery eventually to the discharge end of the conveyor to, say, a stacker. The parts 1 and 2 are of suitable design and need not be described in great detail beyond saying that they may conveniently form a unit, as shown in Figure 1, mounted on crawler tracks, skids, or the like with a suitable chute means 7 spanning the belts 10a, 10b. The present invention is mainly directed to the area of connection 3, between parts 1 and 2 and thw following description, therefore, will be largely limited to that area.

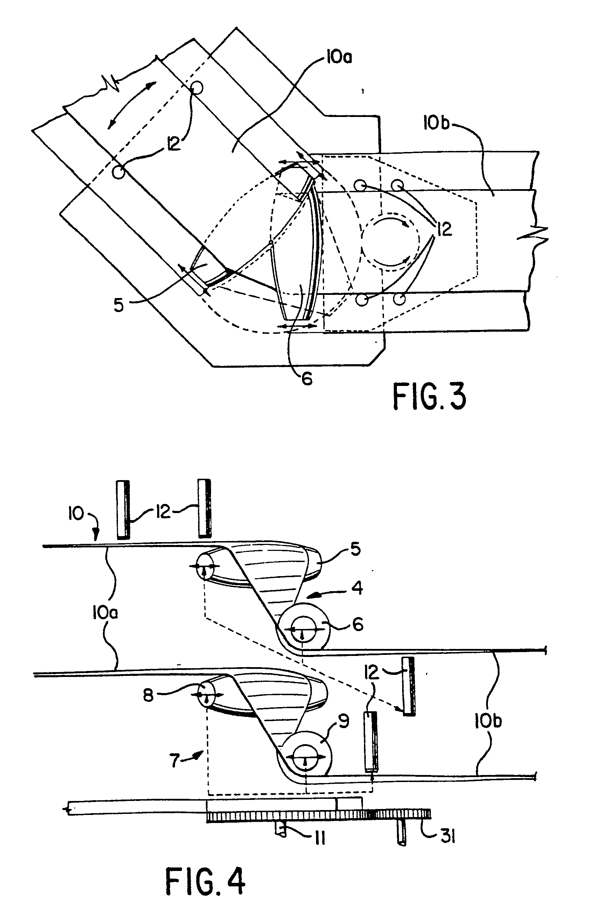

In the area 3, as clearly shown in Figure 4, there are two pairs of belt bending rollers, pulleys or drums, an upper pair 4, comprising top roller 5 and bottom roller 6, and a lower pair 7, comprising top roller 8 and bottom roller 9, the upper pair 4 guiding the product-carrying run of conveyor belt 10 and the lower pair 7 guiding the return run of the conveyor.

The rollers 6 and 9 are carried by the part 2, which is referred to herein as the "static" part, and the rollers 5 and 8 are carried by the part 1, which is swingable laterally relative to part 2.

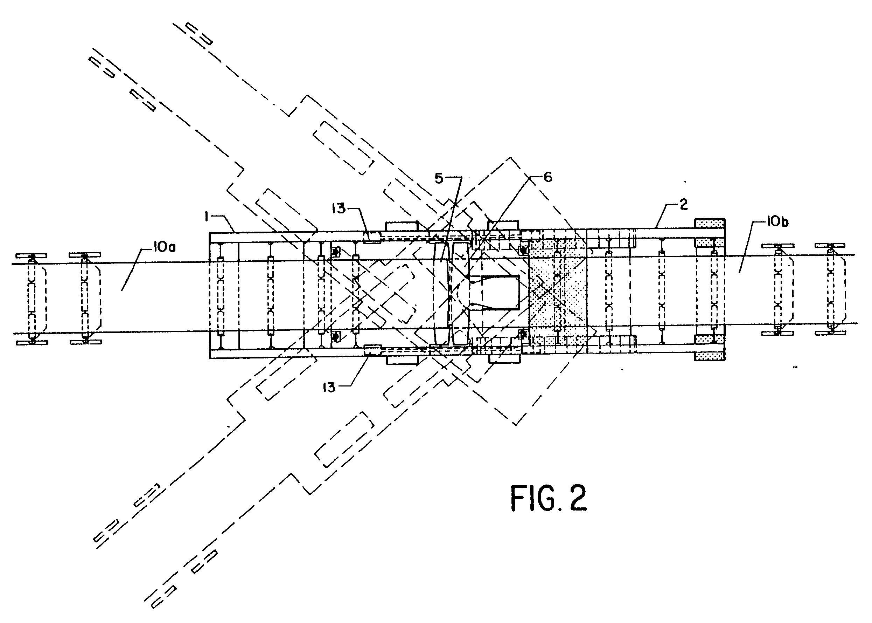

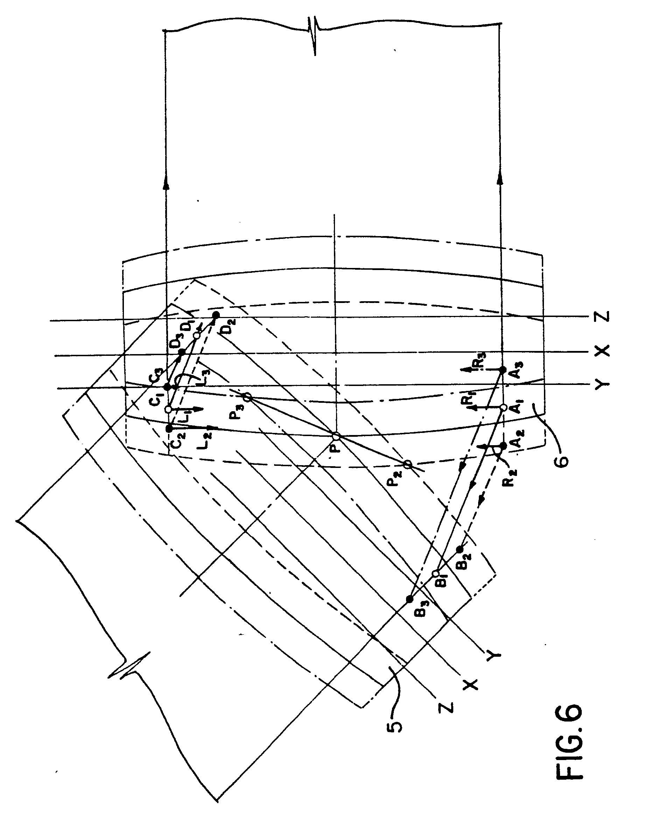

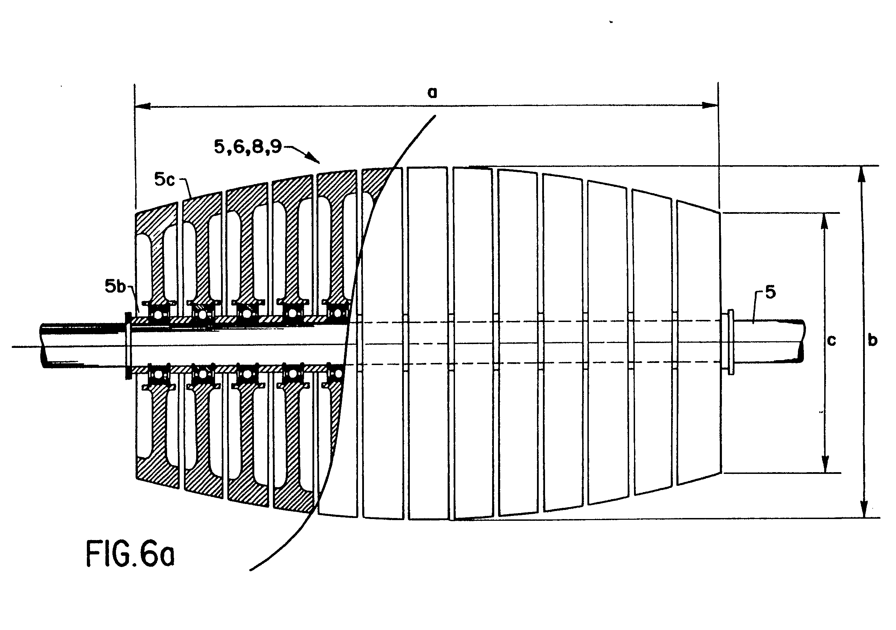

Each of the product-carrying run and return run of the belt has a first stretch 10a on part 1 and a second stretch 10b on part 2 and these, of course, move laterally relative to one another as part 1 is swung laterally relative to part 2 about pivot 11 in order to, say, follow the face mining machine. It should be noted that the location of pivot 11 in plan view is the tangency point of the roller pair 5 and 6 and pair 8 and 9 when such rollers are in their normal or non-compensated positions, as with pivot point "P" in Figure 6. In this regard the part 1 may be dragged through its swing by the mining machine to which it may be attached, or may be driven, so as to swing about part 2 and follow the mining machine (see Figure 2), by suitable motors (not shown) on part 2, driving through gearing 31 (Figure 4). This means that rollers 5 and 8 also swing laterally (since they are mounted on part 1) relative to rollers 6 and 9 on "static" part 2, which would have deleterious stressing and training and alignment effects upon the belt in passing from one roller to another in each pair without provision of the compensation provided by the present invention.

Such compensation is provided, in the illustrated embodiment, by sensors 12 detecting sidewise slippage of the belt and feeding signals to adjustment mechanism, such as that shown at 13 in Figure 2, which moves at least the top roller in each pair longitudinally of the belt to achieve a safe condition once again. Alternatively, of course, the bottom roller could be moved longitudinally, or both rollers could be moved longitudinally, ideally, by equal amounts by manually or automatically operating the adjustment mechanism for each roller of each pair (5, 6) (8, 9) to move rollers 5, 6 and 8, 9 through equal distances towards and away from each other. The roller movement results in a variation in the distance between external roller surfaces of the rollers of each pair longitudinally of the direction of movement of the belt.

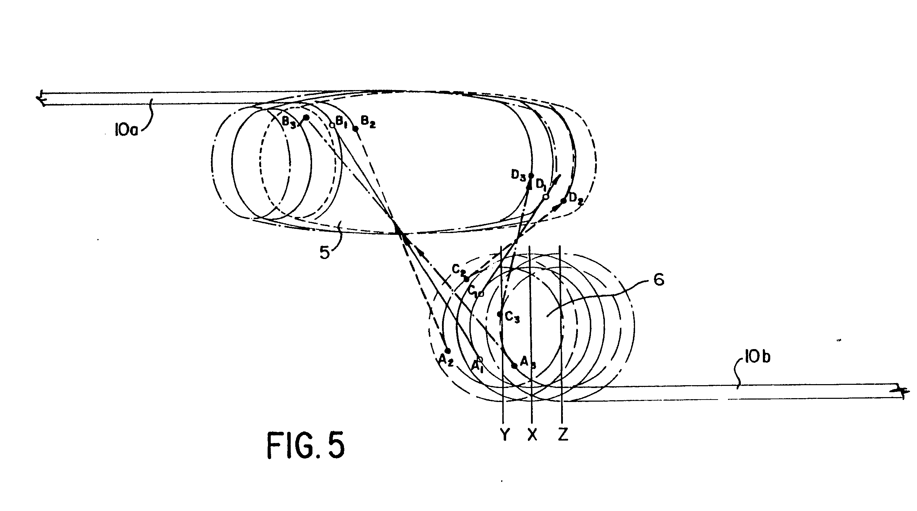

Figures 5 and 6 illustrate the changes which occur in achieving such safe condition in which the belt is safeguarded against excessive side slippage and excessive tensioning and in which belt alignment and training are accomplished. Only the forces relating to roller 6 are shown, as those relating to roller 5 are mirror images of the same. In these Figures the rollers 5 and 6 are so located that, in plan view, the centers of their surface projections normally coincide with pivot point "P" about which part 1 pivots. When part 1 with roller 5 swings about point "P", the fiber of the belt between rollers 5 and 6 coinciding with point "P" is the only one that is vertical. All other fibers of the belt are inclined at some angle to vertical and were the rollers of regular cylindrical form, the length of the fibers, and the tension therein, would increase with distance from point "P". However the crowning of the rollers offsets this condition. Indeed, the degree of crowning of the rollers can be such as to concentrate the tension forces near the center of the belt and reduce them near the belt extremities. Ideally the crowning profile of the belt rollers will be selected to optimize the path length of individual longitudinal elements in the belt taking into account the variable roller diameter at each element, the vertical spacing of the bend roller pairs, the angle of bend and the equilibrium roller adjustment positions longitudinally of the direction of movement of the belt in compensating for relative swinging movement of the rollers in each bend roller pair. In a practical situation, one would impose a design constraint of, for example, depending upon the construction of the belting, not greater than 5 percent difference in path length from the longest to the shortest fibre. The resulting profile will usually be convex, but may in fact be a simple radius, parabolic, conical or the like depending upon the desired effect.

The belt will stay in the centered position on the rollers if the sum of all horizontal (transverse) components of tension forces within the belt at each pulley remains equal to zero.

$$\sum_{P}^{C} L_l = \sum_{P}^{A} R_l$$

(Sum of all horizontal tension force components $L_l$ between points "P" and "C" equals to sum of all horizontal tension force components $R_l$ between points "P" and "A").

If the forces on the left side prevail, the belt will move to the right:

$$\sum_{P}^{C} L_l > \sum_{P}^{A} R_l$$

and vice versa:

$$\sum_{P}^{C} L_l < \sum_{P}^{A} R_l$$

As shown in Figure 6, moving rollers 5 and 6 towards each other will increase tension on the left side and decrease tension on the right side of point "P". Moving rollers apart will achieve the opposite effect. Thus, there is a point where the sum of all horizontal (transverse) tension force components within the belt at both rollers equals to zero. That is an equilibrium point or point of operation of the present invention. At this point alignment of the belt and the correct training of the belt through the rollers is accomplished.

It has been found in tests, that a segmented pulley such as that shown in Figure 6a gives good results and provides for a swing of part 2 of about 50° either side of the center line of part 1. Each segment 5c of the pulley 5, 6, 8 or 9 of Figure 6a has its own bearing 5b mounting on a common shaft 5a and by making the pulley (or roller, or drum) 5, 6, 8 or 9 of, say, 6" (152 mm) small diameter (dimension c in Figure 6a) and, say 18" (456 mm) large diameter (dimension b in Figure 6a) and with a longitudinal dimension of between say 6 feet (1.83 m.) to 7 1/2 feet (2.29 m.) (dimension a in Figure 6a) a good vertical spacing between rollers 5 and 6 and 8 and 9 can be achieved and this has beneficial results on the angle of swing of rollers 5 and 8. It is anticipated that in low coal seams with restricted headroom the roller pairs may have to be moved vertically closer together than would be normally considered optimum (a center spacing of about two roller maximum diameters) and the angle of swing of part 2 may be then restricted somewhat, but on angle of 40—45° either side of center is expected in most conditions and more in ideal conditions. The segmented pulleys of Figure 6a have low friction with the flexible belts passing thereover and once the sensors 12 have caused the pulley pairs to be moved together or away from each other, to achieve equilibrium for a given condition, the controls become largely inactive.

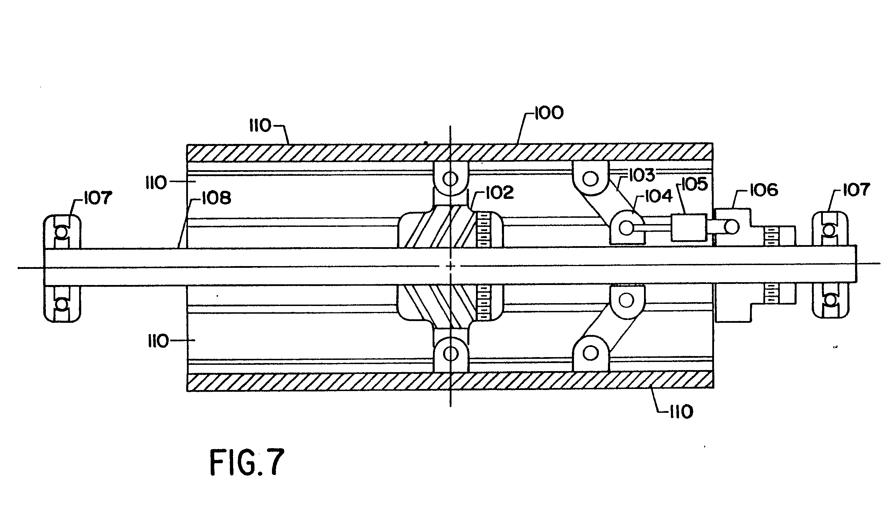

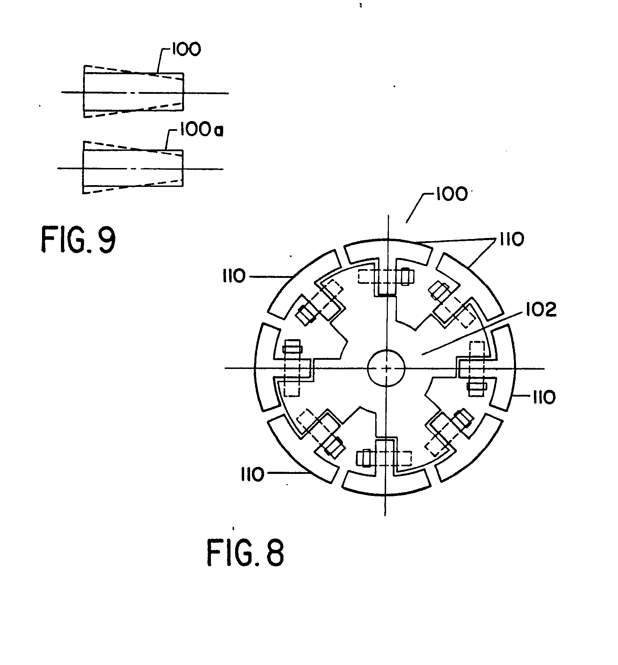

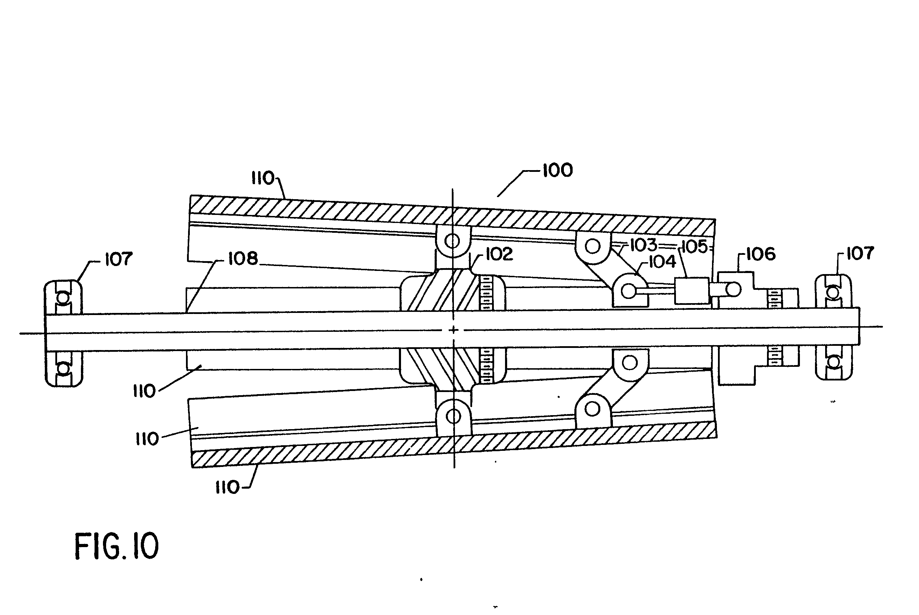

In the embodiment of the invention as described with respect to Figures 1 to 4 the distance between the external roller surfaces is varied by adjusting the positions of the roller centers longitudinally of the direction of movement of the belt. In Figures 7 to 10 an alternative embodiment is shown. In this embodiment pairs of conical rollers 100, 100a (Figure 9) are employed in place of rollers 5, 6; 8, 9 and in place of a mounting means capable of longitudinally moving the roller centers, means is provided for producing variable conicity of the rollers to vary the distance between external roller surfaces.

Rollers 100, 100a are (as best seen in Figure 7, 8 and 10) made up of a series of elements 110 extending longitudinally of the rollers. These elements 110 are pivotally mounted on spider 102 and connected to laterally slidable sleeve 104 by linkage 103. Actuator 105 mounted to collar 106 is arranged to move sleeve 104 either to the right or to the left such as to tilt all drum surface elements 110 equally and simultaneously, thus achieving conicity of the drum surface (see Figures 7 and 10). The principle effect of coning each roller of a roller pair is to increase its circumferential dimension, say, at the left side with a corresponding decrease at the right side, generating proportionally variable tensions in the belt fibres. As in the previous embodiments the actuator 105 would control conicity only to vary the distance between external roller surfaces of the rollers of each pair to provide balancing horizontal (transverse) tension components within the belt at the drum, or roller. Actuator 105 could, if desired, be arranged to respond to sensors 12 (Figure 3).

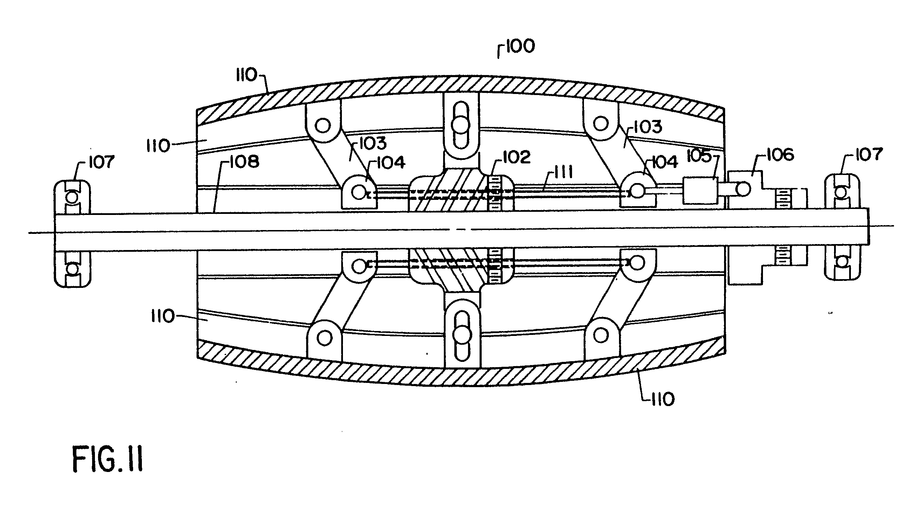

A further alternative is seen in Figure 11 which is a view similar to Figure 7, and which shows the roller 5 or 6; or 8 or 9, preferably having an external contour as seen in Figures 3 and 4 arranged so that instead of being mounted with roller centers adjustable longitudinally of the direction of movement of the belt, as in Figures 1 to 4, a linkage arrangement is provided to move the roller elements 110 outwardly or inwardly to increase or decrease the roller outside diameter and in this fashion vary the distance between the external roller surfaces of the rollers of each pair. Preferably, rollers 5, 6, 8 and 9 are all similarly provided and preferably also, mean is provided to respond to signals from the sensors 12 to automatically alter roller diameters.

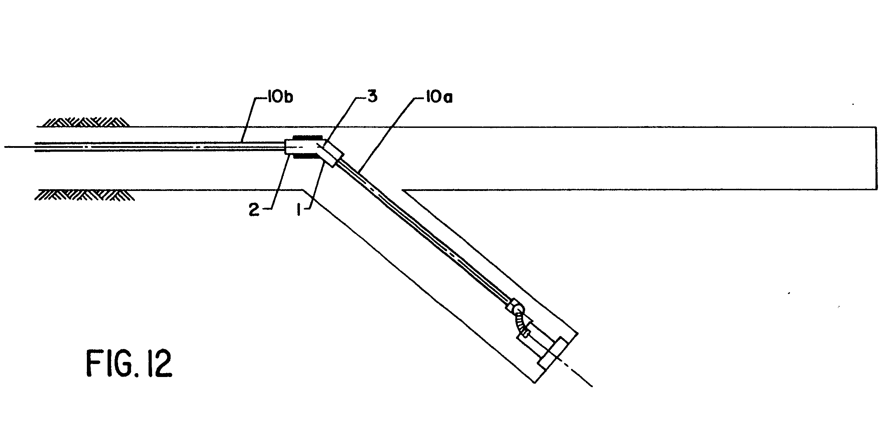

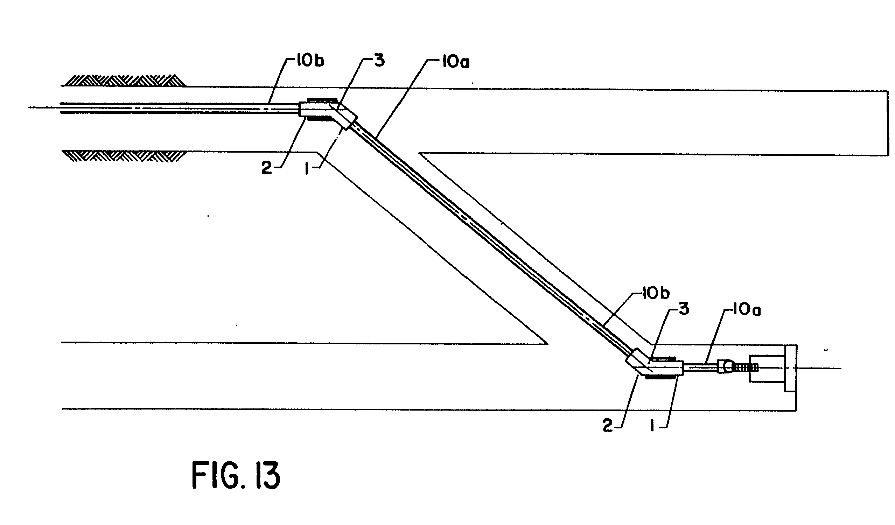

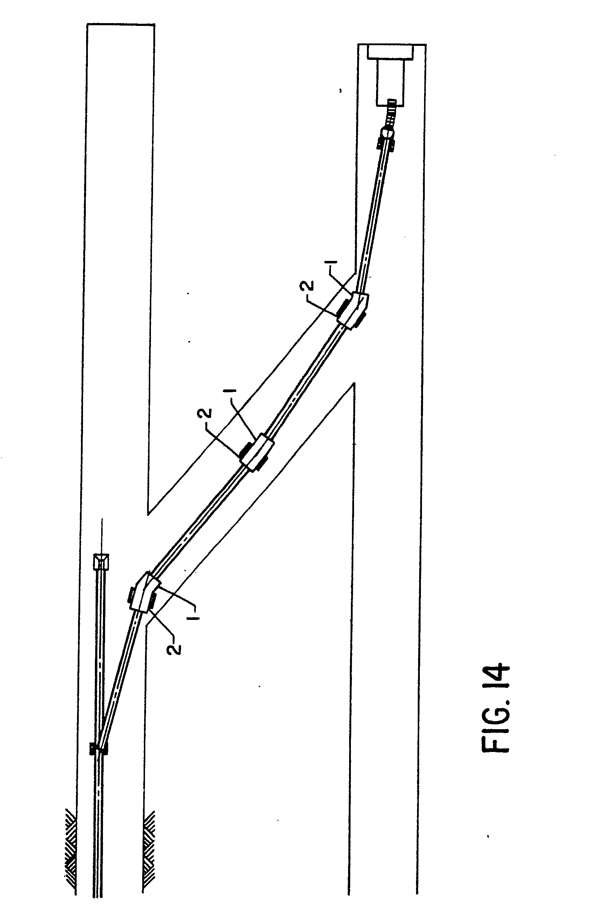

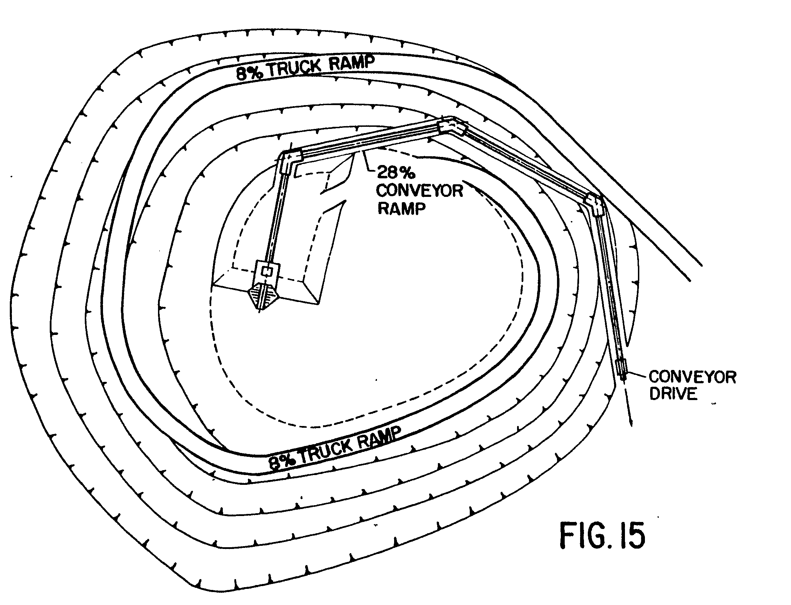

Figures 12, 13 and 14 show schematically the invention utilized in different systems operating behind a face mining machine or the like. The invention is equally applicable to convey products from, say, an in-pit semi-mobile crusher, in which the conveyor ramps out of the pit on a convenient segmental spiral pattern as shown in Figure 15.

As can be seen in Figure 15 it is obvious that by consecutive application of the principles of the invention, any angle up to 360° and beyond can be turned. It will be equally obvious that serpentine angles to either side can be turned within one conveyor flight.

It will be clear that the invention is also applicable to conditions in which the static and swingable frames 2, 1 are mounted at a fixed angle for relatively long periods of time.

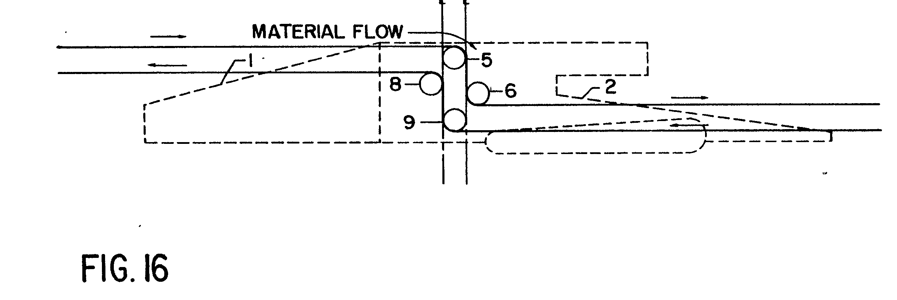

In some applications, where headroom is severely restricted, for example low seam underground conveying, the upper and lower pairs of rollers 5, 6 and 8, 9 may be displaced longitudinally (see Figure 16) with respect to one another and to pivot about their individual pivot axes for bend roller pairs (shown as center lines) and their mountings modified to accommodate for the repositioning.

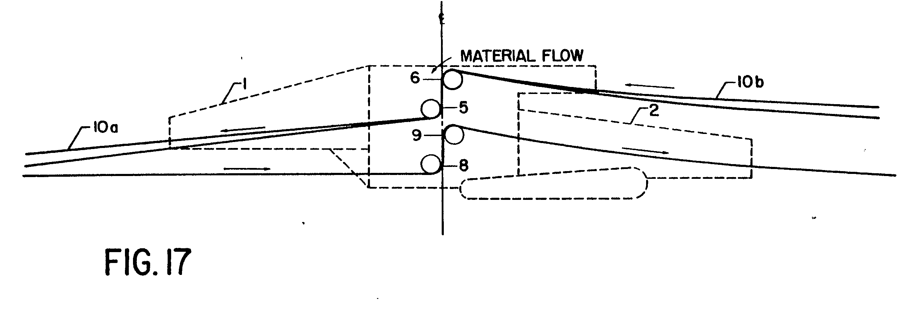

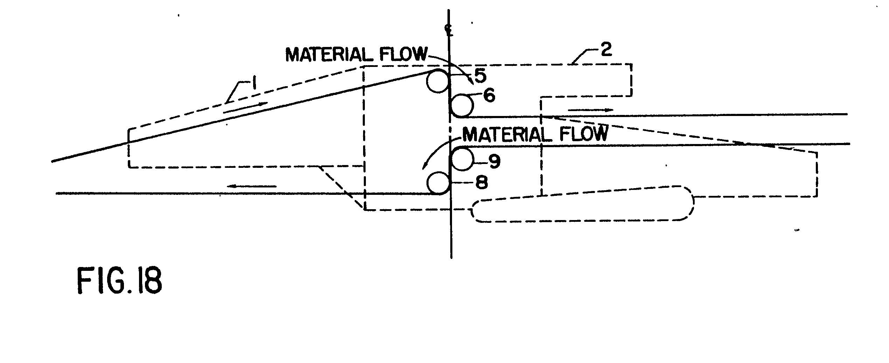

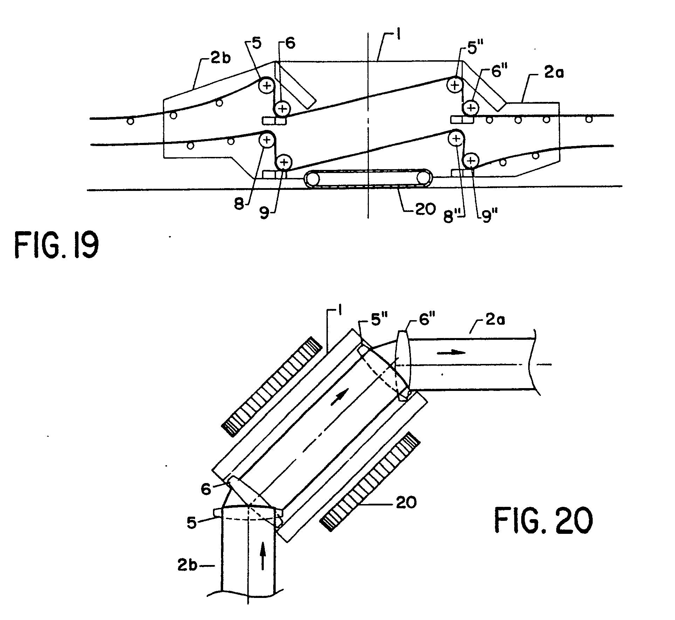

Figure 17 shows an embodiment in which conveying is effected in the reverse direction to that of Figure 1 and Figure 18 shows an embodiment in which material is conveyed in both directions simultaneously. Figures 19 and 20 illustrate a mobile belt bending machine for up to 90° angles in which two swingable portions 2a and 2b are mounted to the central fixed frame 1 which is mobile by means of tracks 20. All other details including compensation means for roller pairs are as previously described.

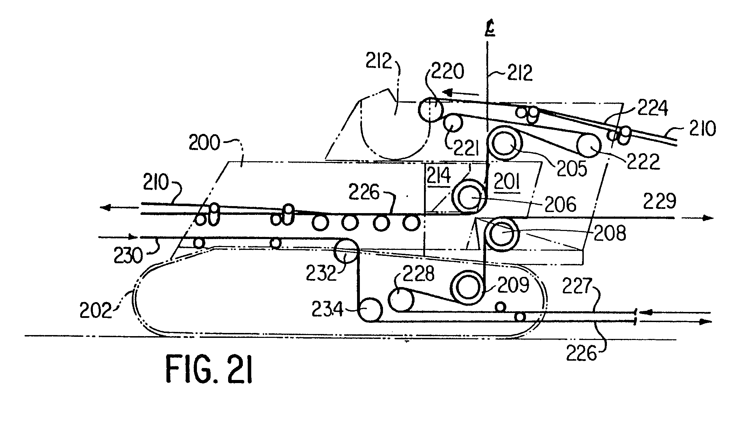

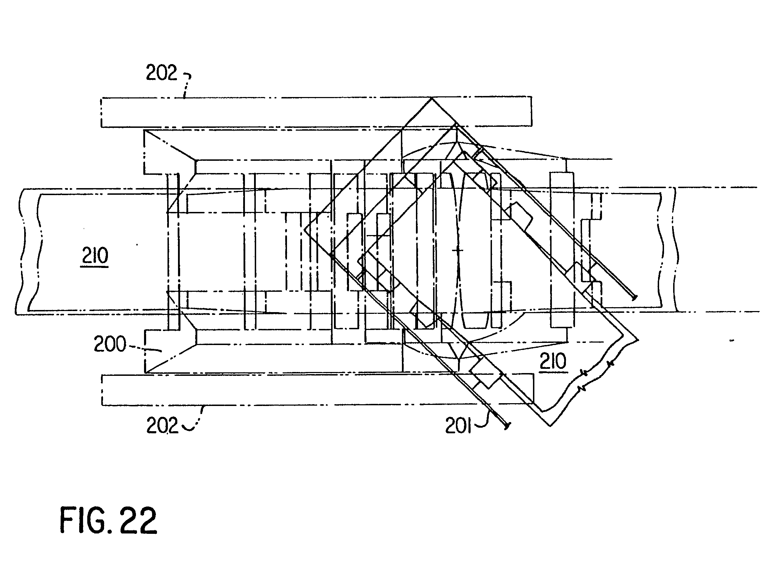

In Figure 21, a belt bending arrangement comprising a frame 200 mounted for movement on endless tracks 202 carries a swingable frame 201 mounted for swinging in the horizontal plane with respect to the frame 200. Two pairs of bent bending rollers 205, 206 and 208, 209 are provided to bend the conveyor belt 210 through an angle up to, say, 45° (see Figure 22). The frame 201 pivots about its pivot center line 212 and carries the pulley 205 of the pulley pair 205, 106 and the pulley 208 of the pulley pair 208, 209 so that pulleys pivot with respect to their pair 206 and 209. As in all preceding configurations means is provided to vary the distance between the external roller surfaces of the pair 205, 206 and of the pair 208, 209, longitudinally of the direction of movement of the belt 210 to compensate for the relative swinging movement of the rollers 205, 208 relative to the other half of their pairs 206, 209. This can conveniently be done by moving at least one or the other of each pair longitudinally of the direction of movement of the belt by a suitable arrangement on either one or both of the frames 200, 201.

The swingable frame 201 overhangs in cantilever fashion behind the frame 200 and carries the chute 212 of a hopper arrangement 214. Additionally the swinging frame 201 carries conveyed material transfer pulley system 220, 221, 222 over which the incoming material carrying belt run 224 of the belt 210 passes.

Material coming from the right hand side of the Figure on the belt 210 arrives at the belt bending arrangement and the incoming run 224 passes over the first 220 of the pulleys of the transfer system and discharges the conveyed material into the chute 212 of the hopper 214. The run 224 having passed around the pulley 222 then enters the belt bending arrangement and passes over the bending pulleys 205, 206 to provide an outgoing run 226 which is a continuation of the incoming belt run 224. The hopper 214 feeds the material transferred into its chute 212 back onto the outgoing run 226 of the belt 210 which then proceeds to the left for discharge. The return run 230 of the belt 210 passes through frame 200 over rollers 232, 234 from where a run 226 proceeds to a conventional tail pulley remote from the belt bending arrangement. The run 227 returns from the tail pulley passes over a pulley 228 on the frame 200 and then over the bending roller pair 209, 208 where it returns along run 229 to a second remote tail pulley mounted for longitudinal and/or transverse motions suitable to the application.

It will be clear from this description that the bent bending arrangement of Figures 21 and 22 may readily be inserted into an existing conveyor belt system to enable bending of the system conveniently at horizontal angles of up to 45°.

Referring now to Figures 23 through 26, Figures 23 and 24 show schematically an alternative arrangement to that shown in Figures 19 and 20 and suitable for use in situations where head room is limited and where horizontal bend angles of up to 90° will be required.

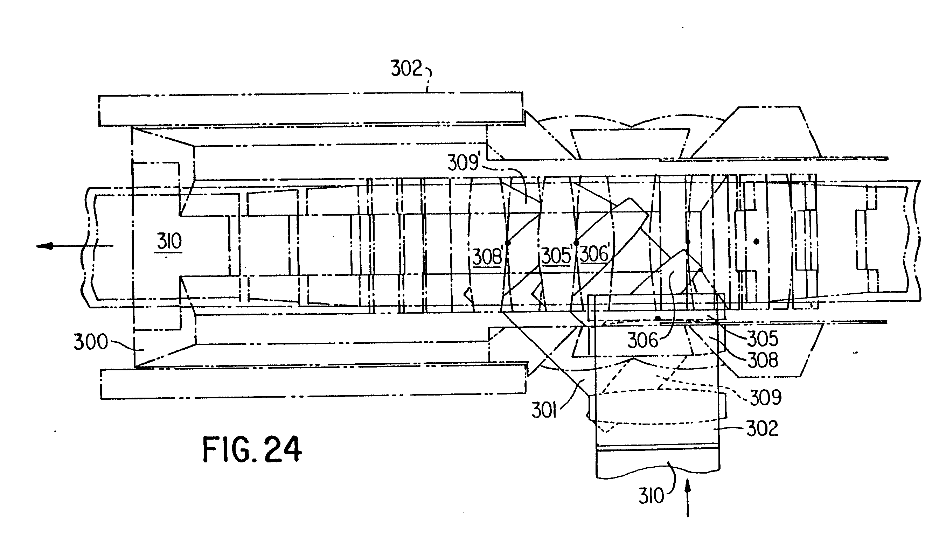

A frame 300 is movably mounted on endless tracks 302 and has a swingable second frame 301 mounted thereon for swinging movement in a horizontal plane thereto. The second frame 301, in its turn has a further frame 302 mounted thereon for swinging thereabout in a horizontal plane (see Figure 24).

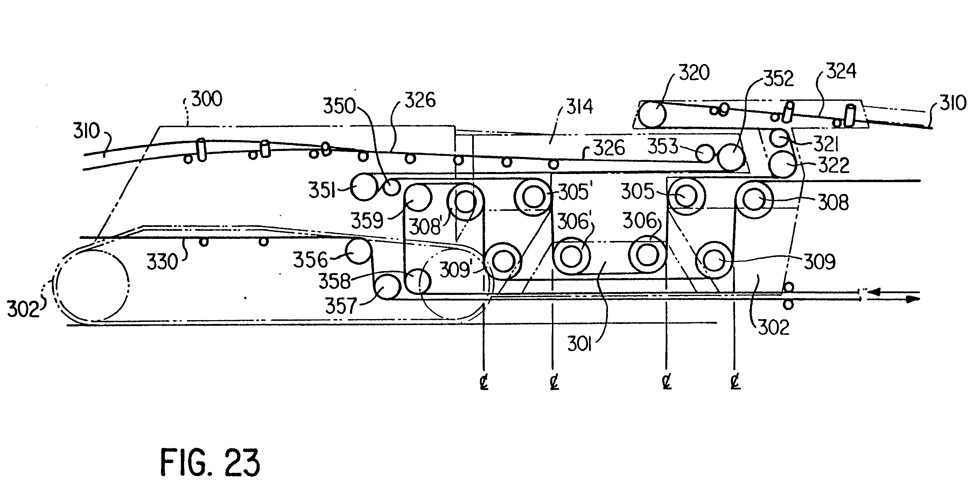

The frame 302 carries roller 305 of roller pair 305, 306 and roller 308 of roller pair 308, 309 so that the rollers 305, 308 may rotate relative to the other half of their pairs 306, 309 respectively. The frame 301 carries the rollers 309, 306 and additionally carries the roller 306' of the roller pair 305', 306' and the roller 309' of the roller pair 309', 308' so that rollers 306', 309' may rotate relatively to the other halves of their roller pairs 305', 308'. 305' and 308' are carried on frame 300. As before it is to be understood that means is provided to vary the distance between the external roller surfaces of the rollers of each of the pairs in the system, longitudinally of the direction of movement of the belt to compensate for relative swinging movement of the rollers of each pair. Conveniently this may be accomplished by providing means for adjusting movement longitudinally of the direction of belt movement of at least one or the other of each of said pairs. To this end suitable mountings may be provided on one or both of frames 300, 301 or one or both of frames 301, 302. The center line of pivot of the rollers 305, 306; 308, 309; 305', 306' and 308', 309' are shown as such. It is understood that one skilled in the art could design other structural frame arrangements than frames 300, 301 and 302 which would still satisfy the geometrical relationships of the bending roller pairs and the incoming and outgoing runs of belting. In operation conveyed material moving from right to left as seen in Figure 23 provides an incoming carrying belt run 324 which enters a conveyed material transfer pulley system 320, 321, 322, the material being discharged from the belt run 324 close to the pulley 320 into a hopper 314. The belt run 324 has a substantially flat section near the transfer pulley 320 and this section is suitable to mount belt cleaning scrapers or cleaners. A spiral self-cleaning roller could be provided at the bend position to further clean the belt. This cleaning is important where wet or sticky materials are being handled and ss to clean the belt before entering the bending rollers 305, 306. The belt passes around roller 322, and then over the bending rollers 305, 306 where it is bent through an angle of, say, up to 45° about the pivot axis. The belt then passes over the roller 306' and over the roller 305' and is bent through a further, say 45° about the pivot axis of the pulley 306', 305'. After that the belt passes over pulleys 350, 351, 352, and 353 to provide an outgoing belt run 326 which is of course a continuation of the incoming belt 324. Material from the hopper 314 is deposited on outgoing belt run 326 which proceeds from right to left clear of the frame 300 and on to a remote discharge point. The return belt run 330 enters the frame 300 and passes over rollers 356, 357 and out to the right (as seen in Figure 23) to a conventional tail section where it is reversed and returned to the belt bending arrangement. The belt passes over the rollers 358 and 359 to the belt bending roller pairs 308' and 309' where it undergoes an up to 45° bend about the pivot axis of the rollers 308', 309' and after proceeding through rollers 309, 308 it experiences a further bend of up to 45° about the pivot axis of rollers 308, 309. From thence it passes to the right (as seen Figure 23) to a second remote tail pulley. In Figure 24 it will be seen that the belt 310 passes through a full 90° turn from where it enters the belt bender arrangement from the bottom of the page as seen in Figure 24 out to the left.

It is clear that the belting runs to the conventional tail pulley are enabled by the pulley combination 356, 357 and 358, 359 which deflect the return run 330 under the belt bending machine to the remote tail pulley location and receive it back into the belt bending machine again prior to entering the first belt bending roller 308, for the return run. In some applications, it will be advantageous to omit pulleys 356, 357 and 358, 359 providing only such deflection pulleys as will be required to enable belting run 330 to enter the first belt bending roller 308' directly from the left side of the figure. In such a case, the ground loop and conventional tail pulley do not exist; only the remote auxiliary tail pulley associated with the loading point of belting run 324 will be used.

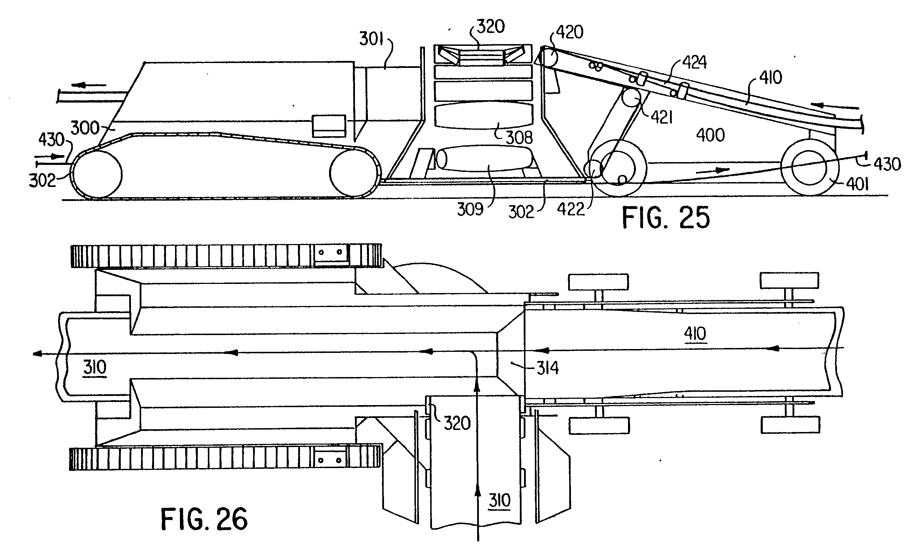

In Figures 25 and 26 there is shown an arrangement where the embodiment according to Figures 23 and 24 may be used with an existing ground loop system to provide for an additional input to the system along the line of the original conveyor. A trip car 400 mounted on wheels 401 provides for material conveyed on the belt 410 to be carried through a material transfer run 424 which passes over a transfer pulley system 420, 421 and 422 to discharge material into the hopper 314 adjacent the roller 320. Thereafter material from both the belt 410 and the belt 310, before it turns through the right angle to the left as seen in Figure 26 is conveyed on the belt 310 for discharge. The belt 410 after passing through the pulleys 420, 421 and 422 moves from right to left and thereafter enters pullesy 358 and 359 of the belt bending machine as shown in Figure 23.

The novelty of the arrangement of Figures 25 and 26 is seen particularly in that on one continuous conveyor flight there is provided independent means to load output from, for example, two mining machines for combined ore transportation to the discharge point, at least one of such mining machines operating in a remote location in a horizontal sense from the centre line of the conveyor system.

## Claims

1. A belt guidance arrangement comprising a first pair of vertically spaced belt bending rollers and a second pair of vertically spaced belt bending rollers, an endless belt wrapped over said pairs of rollers, one of each of said pairs of rollers being mounted on a first, static frame and the other of each of said pairs of rollers being mounted on a second frame swingable horizontally with respect to said first frame, means to vary the spacing between external roller surfaces of the rollers of each pair, longitudinally of the direction of movement of said endless belt to compensate for relative swinging movement of the rollers in each pair by balancing the sum of the transverse components of the tension forces in the belt on the left hand side of a belt with the sum of the transverse components of the tension forces in the belt on the right hand side of the belt.

2. An arrangement as claimed in claim 1 in which said means to vary the spacing between the external roller surfaces of the rollers of each pair comprises means for mounting at least each said one or each said other of said pairs of rollers for adjustable movement longitudinally of the direction of movement of the belt, and means for adjustment of the movable rollers.

3. An arrangement as claimed in claim 2, wherein each of said rollers in each pair is adjustable longitudinally of the belt.

4. An arrangement as claimed in claim 2 or 3 in which said means for adjustment are adapted to adjust each roller or each pair by an equal amount towards or away from each other.

5. An arrangement as claimed in any of claims 2 to 4 in which each roller of each pair is convex in configuration having a maximum diameter to minimum diameter ratio of about 3:1 and a length to maximum diameter ratio of about 5:1.

6. An arrangement as claimed in claim 5 in which at least one of said rollers in each pair is segmented.

7. An arrangement as claimed in any of claims 1 to 5 in which each roller of each pair is a segmented convex roller.

8. An arrangement as claimed in any of claims 2 to 6 in which the vertical separation of roller pair centers is about two roller maximum diameters.

9. An arrangement as claimed in any of claims 1 to 8 in which said static frame and said second frame are constructed as a unit and are mounted for movement as a unit.

10. An arrangement as claimed in claim 9 in which chute means is provided spanning said frames.

11. A plurality of belt guidance arrangements as claimed in claim 1 in combination with an in-pit semi-mobile cruscher adapted for operation in an open pit.

12. An arrangement as claimed in claim 1 in which a lower one of each of said pairs of rollers is mounted on said static frame and an upper one of each of said pairs of rollers is mounted on said swingable frame.

13. An arrangement as claimed in claim 1 in which an upper one of each of said pairs of rollers is mounted on said static frame and a lower one of each of said pairs of rollers is mounted on said swingable frame.

14. An arrangement as claimed in claim 1 in which an upper one of the first pair of said rollers and a lower one of the second pair of said rollers are mounted on the swingable frame; and a lower one of the first pair of said rollers and an upper one of the second pair of said rollers are mounted on the static frame.

15. An arrangement as claimed in claim 1 in which a lower one of the upper pair of said rollers and an upper one of the lower pair of said rollers are mounted on the swingable frame; and an upper one of the upper pair of said rollers and a lower one of the lower pair of said rollers are mounted on the static frame.

16. An arrangement as claimed in claim 1 in which said upper pair of rollers and said lower pair of rollers are mounted on said frames so as to be in an overlapping condition in the belt vertical direction.

17. An arrangement as claimed in claim 2 comprising a further frame swingable horizontally with respect to said first frame and located at an end of said static frame remote from said second frame in the direction of belt travel and a further set of first and second pairs of vertically spaced belt bending rollers, one of each of said further set of said pairs being mounted in said static frame and the other of each of the further set of each of said pairs of rollers being mounted on said further frame; at least each said one or each said other of said further set of pairs of rollers being mounted for adjustable movement longitudinally of the direction of movement of the belt to similarly compensate for relative swinging movement of the rollers in each of said further set of pairs.

18. An arrangement as claimed in claim 1 in which the means to vary the distance between the external roller surfaces of the rollers of each pair longitudinally of direction of movement of the belt comprises means for increasing and decreasing the outside diameter of at least one of each pair of rollers.

19. An arrangement as claimed in claim 18 in which means is provided for increasing and decreasing the outside diameter of each roller of each pair.

20. A plurality of belt guidance arrangements as claimed in claim 1 mounted remotely of one another on one conveyor flight such as to enable the conveyor to be turned in segmental circular, spiral, or serpentine angles.

21. An arrangement as claimed in claim 1 comprising a further frame swingable horizontally with respect to said first frame and located at an end of said static frame remote from said second frame in the direction of belt travel and a further set of first and second pairs of vertically spaced belt bending rollers, mne of each of said further set of said pairs being mounted in said static frame and the other of each of the further set of said pairs of rollers being mounted on said further frame, means to vary the difference between the external roller surfaces of the rollers of each pair of said further set of rollers, longitudinally of the direction of movement of the belt to compensate for relative swinging movement of the rollers in each pair of said second set of rollers to similarly compensate for relative swinging movement of the rollers in each of said further set of pairs.

22. An arrangement as claimed in claim 1 comprising a further frame swingable horizontally with respect to said second frame and located at an end of said second frame remote from said first frame in the direction of belt travel and a further set of first and second pairs of vertically spaced belt bending rollers, one of each of said further set of said pairs being mounted in said second frame and the other of each of the further set of each of said pairs of rollers being mounted on said further frame; at least each said one or each said other of said further set or pairs of rollers being mounted for adjustable movement longitudinally of the direction of movement of the belt to similarly compensate for relative swinging movement of the rollers in each of said further set of pairs.

23. An arrangement as claimed in claim 1 comprising a further frame swingable horizontally with respect to said second frame and located at an end of said second frame remote from said first frame in the direction of belt travel and a further set of first and second pairs of vertically spaced belt bending rollers, one of each of said further set of said pairs being mounted in said second frame and the other of each of the further set of each of said pairs of rollers being mounted on said further frame; means to vary the difference between the external roller surfaces of the rollers of each pair of said further set of rollers, longitudinally of the direction of movement of the belt to compensate for relative swinging movement of the rollers in each pair of said second set of rollers to similarly compensate for reltive swinging movement of the rollers in each of said further set of pairs.

24. An arrangement as claimed in claim 12 further including a hopper means on said swingable frame overhanging said fixed frame and a conveyor material transfer pulley system for an incoming carrying belt run located on said swingable frame and feeding into said hopper means to transfer conveyed material to said hopper means from said belt run prior to said belt run passing through the belt guidance arrangement, said hopper chute means being located relative to a material conveying outgoing belt run continuation of said incoming belt run which has passed through the guidance arrangement whereby to return conveyed material to said material converying belt run for said hopper means.

25. An arrangement as claimed in claim 22 further including a hopper means extending above said first and second frames and a conveyor material transfer pulley system for an incoming carrying belt run located on said further frame and feeding into said hopper means to transfer conveyed material to said hopper means from said belt run prior to said belt run passing through the belt guidance arrangement, said hopper means being located relative to a material conveying outgoing belt run continuation of said incoming belt run which has passed through the guidance arrangement whereby to return conveyed material to said material conveying belt run from said upper means.

26. An arrangement as claimed in claim 22 further comprising a trip car device arranged upstream of said belt bending arrangement and overhanging said further frame and a conveyor material transfer pulley system for an incoming carrying belt run located on said trip car and feeding into said hopper means to transfer conveyed material to said hopper means from a material conveyor belt run whereby said hopper means may simultaneously receive conveyed material from a belt car run on said further swingable frame and from said trip car.

27. An arrangement as claimed in any of claims 1, 2, 17 and 21 in which each roller of each pair is convex.

28. An arrangement as claimed in claim 2 in which the roller surfaces of the rollers of each pair has a crowned profile determined to optimize the path length of individual longitudinal elements in the belt and taking into account the variable roller diameter at each element, the vertical spacing of the bending roller pairs, the angle of bend of the belt and the equilibrium roller adjustment positions longitudinally of the direction of movement of the belt in compensating for relative swinging movement of the rollers in each bend roller pair.

29. An arrangement as claimed in claim 1 or claim 2 in which at least one of the rollers of each pair is convex.

30. A method of balancing the sum of transverse components of tension forces in an endless conveyor belt on the left hand side thereof with the sum of transverse components of tension forces in said belt on the right hand side thereof, when said belt is being turned through an abrupt horizontal angle in a belt angle station which comprises a first pair of vertically spaced belt bending rollers and a second pair of vertically spaced belt bending rollers, one of each of said pairs of rollers being mounted on a first, static frame and the other of each of said pairs of rollers being mounted on a second frame angled horizontally with respect to said first frame, said method comprising the step of controlling the path length distance of individual longitudinal belt fibers passing through said rollers by governing the distance between the external roller surfaces of the rollers of each pair, longitudinally of the direction of movement of the belt, whereby to obtain stable training of the belt and avoid undesirable stress distribution therein.

**Patentansprüche**

1. Bandführungseinrichtung, gekennzeichnet durch· ein erstes Paar vertikal beabstandeter Bandbiegewalzen und ein zweites Paar vertikal beabstandeter Bandbiegewalzen, einem endlosen Band, das um die Walzenpaare gelegt ist, wobei eine Walze eines jeden Walzenpaares an einem ersten, stationären Rahmen und die jeweils andere Walze der Walzenpaare an einem zweiten Rahmen befestigt sind, der gegenüber dem ersten Rahmen horizontal schwenkbar ist, und eine Einrichtung zum Variieren des Abstandes zwischen äußeren Walzenflächen der Walzen jedes Paares längs der Bewegungsrichtung des endlosen Bandes zum Ausgleich der relativen Schwenkbewegung der Walzen jedes Paares durch Ausgleich der Summe der Querkomponenten der Spannungskräfte in dem Band an der linken Seite des Bandes mit der Summe der Querkomponenten der Spannungskräfte in dem Band an der rechten Seite des Bandes.

2. Einrichtung nach Anspruch 1, dadurch gekennzeichnet, daß die Einrichtung zum Variieren des Abstandes zwischen den Walzenaußenflächen der Walzen jedes Paares eine Einrichtung zum Halten wenigstens jeweils der einen oder der anderen Walze der Walzenpaare, so daß diese Walzen längs der Bewegungsrichtung des Bandes einstellbar bewegbar sind, und eine Einrichtung zum Einstellen der bewegbaren Walzen aufweist.

3. Einrichtung nach Anspruch 2, dadurch gekennzeichnet, daß alle Walzen jedes Walzenpaares längs des Bandes einstellbar sind.

4. Einrichtung nach Anspruch 2 oder 3, dadurch gekennzeichnet, daß die Einstelleinrichtung die Walzen eines jeden Walzenpaares um eine gleiche Strecke aufeinander zu oder voneinander weg einstellen kann.

5. Einrichtung nach einem der Ansprüche 2 bis 4, dadurch gekennzeichnet, daß jede Walze eines jeden Walzenpaares eine konvexe Form hat mit einem Verhältnis des größten Durchmessers zum kleinsten Durchmesser von etwa 3:1 und einer Länge um größten durchmesser von etwa 5:1.

6. Einrichtung nach Anspruch 5, dadurch gekennzeichnet, daß wenigstens eine der Walzen jedes Paares in Abschnitte geteilt ist.

7. Einrichtung nach einem der Ansprüche 1 bis 5, dadurch gekennzeichnet, daß jede Walze eines jeden Walzenpaares eine segmentierte, konvexe Walze ist.

8. Einrichtung nach einem der Ansprüche 2 bis 6, dadurch gekennzeichnet, daß der vertikale Abstand der Walzenpaarachsen etwa zwei maximalen Walzendurchmessern entspricht.

9. Einrichtung nach einem der Ansprüche 1 bis 8, dadurch gekennzeichnet, daß der stationäre Rahmen und der zweite Rahmen als eine Einheit aufgebaut und als Einheit bewegbar gehalten sind.

10. Einrichtung nach Anspruch 9, ferner gekennzeichnet durch eine Schütteinrichtung, die die Rahmen überspannt.

11. Mehrere Bandführungseinrichtungen nach Anspruch 1 in Kombination mit einem halbmobilen Minenbrecher, der zum Betrieb in einer offenen Mine geeignet ist.

12. Einrichtung nach Anspruch 1, dadurch gekennzeichnet, daß jeweils die untere Walze eines jeden Walzenpaares an dem stationären Rahmen befestigt ist und daß die jeweils obere Walze an dem schwenkbaren Rahmen abgebracht ist.

13. Einrichtung nach Anspruch 1, dadurch gekennzeichnet, daß jeweils die obere Walze eines jeden Walzenpaares an dem stationären Rahmen und die untere Walze jedes Walzenpaares an dem schwenkbaren Rahmen befestigt sind.

14. Einrichtung nach Anspruch 1, dadurch gekennzeichnet, daß eine obere Walze des ersten Walzenpaares und eine untere Walze des zweiten Walzenpaares an dem schwenkbaren Rahmen befestigt sind, während eine untere Walze des ersten Walzenpaares und eine obere Walze des zweiten Walzenpaares an dem stationären Rahmen befestigt sind.

15. Einrichtung nach Anspruch 1, dadurch gekennzeichnet, daß eine untere Walze des oberen Walzenpaares und eine obere Walze des unteren Walzenpaares an dem schwenkbaren Rahmen befestigt sind, während eine obere Walze des oberen Walzenpaares und eine untere Walze des unteren Walzenpaares an dem stationären Rahmen befestigt sind.

16. Einrichtung nach Anspruch 1, dadurch gekennzeichnet, daß das obere Walzenpaar und das untere Walzenpaar so an den Rahmen befestigt sind, daß sie sich in Bandvertikalrichtung überdecken.

17. Einrichtung nach Anspruch 2, ferner gekennzeichnet durch einen weiteren Rahmen, der horizontal zu dem ersten Rahmen verschwenkbar und an einem Ende des stationären Rahmen angeordnet ist, das von dem zweiten Rahmen in Bandbewegungsrichtung entfernt ist, sowie durch einen weiteren Satz erster und zweiter vertikal beabstandeter Bandbiegewalzenpaare, wobei jeweils eine Walze des weiteren Satzes von Walzenpaaren an dem stationären Rahmen und die jeweils andere Walze an dem weitern Rahmen befestigt sind und wenigstens die jeweils eine oder andere Walze des zusätzlichen Satzes von Walzenpaaren so befeigt ist, daß sie längs der Bewegungsrichtung des Bandes einstellbar ist, um auf gleiche Weise die relative Schwenkbewegung der Walzen jedes Paares des zusätzlichen Walzensatzes zu kompensieren.

18. Einrichtung nach Anspruch 1, dadurch gekennzeichnet, daß die Einrichtung zum Variieren des Abstandes zwischen den Walzenaußenfläche der Walzen jedes Paares längs der Bewegungsrichtung des Bandes eine Einrichtung zum Vergrößern oder Verkleinern des Außendurchmessers wenigstens einer Walze jeden Paares aufweist.

19. Einrichtung nach Anspruch 18, gekennzeichnet durch eine Einrichtung zum Vergrößern und Verkleinern des Außendurchmessers jeder Walze eine jeden Paares.

20. Mehrere Bandführungseinrichtungen nach Anspruch 1, die entfernt voneinander an einer Förderkette angeordnet sind, so daß der Förderer in segmentförmig runden, spiralförmigen oder schlangenförmigen Winkeln geschwenkt werden kann.

21. Einrichtung nach Anspruch 1, gekennzeichnet durch einen weiteren Rahmen, der gegenüber dem ersten Rahmen horizontal verschwenkbar und an einem Ende des stationären Rahmens in Bandbewegungsrichtung von dem zweiten Rahmen entfernt angeordnet ist, und einen weiteren Satz erster und zweiter Paare vertikal beabstandeter Bandbiegewalzen, wobei jeweils eine Walze des weitern Satzes von Walzenpaaren an dem stationären Rahmen und die jeweils andere Walze des weiteren Satzes von Walzenpaaren an dem weiteren Rahmen befestigt sind, und ferner durch eine Einrichtung zum Variieren des Abstandes zwischen den Walzenaußenflächen der Walzen jedes Paares des weiteren Walzensatzes längs der Bewegungsrichtung des Bandes, um die relative Schwenkbewegung der Walzen jedes Paares des zweiten Walzensatzes auszugleichen, um ebenso die relative Schwenkbewegung der Walzen jedes Paares des weitern Satzes zu kompensieren.

22. Einrichtung nach Anspruch 1, ferner gekennzeichnet durch einen weiteren Rahmen, der horizontal gegenüber dem zweiten Rahmen schwenkbar und an einem Ende des zweiten Rahmens angeordnet ist, das in Bandbewegungsrichtung von dem ersten Rahmen entfernt ist, und einen weiteren Satz erster und zweiter Paare von vertikal beabstandeten Bandbiegewalzen, wobei eine Walze jedes Walzenpaares des zusätzlichen Satzes in den zweiten Rahmen eingebaut ist und die jeweils andere Walze jedes Walzenpaares des weiteren Satzes an dem weiteren Rahmen befestigt ist und wenigstens die jeweils eine oder andere Walze der Walzenpaare des zusätzlichen Satzes längs der Bewegungsrichtung des Bandes einstellbar ist, um die relative Schwenkbewegung der Walzen jedes Paares des zusätzlichen Satzes auszugleichen.

23. Einrichtung nach Anspruch 1, gekennzeichnet durch einen weiteren Rahmen, der gegenüber dem zweiten Rahmen horizontal schwenkbar und in Richtung der Bandbewegung an einem von dem ersten Rahmen entfernten Ende des zweiten Rahmens angebracht ist, und einen weiteren Satz erster und zweiter Paare vertikal beabstandeter Bandbiegewalzen, wobei eine Walze der Paare des weiteren Satzes in den zweiten Rahmen eingebaut und die jeweils andere Walze des weiteren Satzes an dem weiteren Rahmen befestigt ist, sowie eine Einrichtung zum Variieren des Abstandes zwischen den Walzenaußenflächen der Walzen jedes Paares des weiteren Satzes von Walzen längs der Bewegungsrichtung des Bandes, um die Schwenkbewegung der Walzen jedes Paares des zweiten Walzensatzes zu kompensieren, um auf diese Weise die relative Schwenkbewegung der Walzen jedes Paares des weiteren Satzes auszugleichen.

24. Einrichtung nach Anspruch 12, ferner gekennzeichnet durch eine Behältereinrichtung an dem schwenkbaren Rahmen über dem feststehenden Rahmen und ein Fördermaterialübertragungsrollensystem für einen ankommenden Tragbandlauf an dem schwenkbaren Rahmen, der die Behältereinrichtung beschickt, um gefördertes Material von dem Bandlauf der Behältereinrichtung zu übertragen, bevor der Bandlauf die Bandsführungseinrichtung passiert, wobei eine Behälterschütteinrichtung gegenüber einer Materialausgangsbandlauffortsetzung des ankommenden Bandlaufes angeordnet ist, der die Bandführungseinrichtung durchlaufen hat, um gefördertes Material dem Materialförderbandlauf für die Behältereinrichtung wieder zuzuführen.

25. Einrichtung nach Anspruch 22, ferner gekennzeichnet durch eine Behältereinrichtung oberhalb des ersten und des zweiten Rahmens und ein Fördermaterialübertragungsrollensystem für einen ankommenden tragenden Bandlauf an dem weiteren Rahmen, der die Behältereinrichtung beschickt, um gefördertes Material von dem Bandlauf der Behältereinrichtung zuzuführen, bevor der Bandlauf die Bandführungseinrichtung durchläuft, wobei die Behältereinrichtung gegenüber einer Materialausgangsbandlauffortsetzung des ankommenden Bandlaufs angeordnet ist, der die Führungseinrichtung passiert hat, wodurch das geförderte Material von der oberen Einrichtung wieder dem Materialförderbandlauf zugeführt wird.

26. Einrichtung nach Anspruch 22, ferner gekennzeichnet durch eine Minenfahrzeugeinrichtung stromaufwärts der Bandbiegeeinrichtung oberhalb des weiteren Rahmen und ein Fördermaterialübertragungsrollensystem für einen ankommenden tragenden Bandlauf an dem Minenfahrzeug zur Beschickung der Behältereinrichtung, um dieser gefördertes Material von einem Materialförderbandlauf zu übertragen, wobei die Behältereinrichtung gleichzeitig gefördertes Material von einem Bandförderlauf an dem weiteren schwenkbaren Rahmen und von dem Minenförderer empfangen kann.

27. Einrichtung nach einem der Ansprüche 1, 2, 17 oder 21, dadurch gekennzeichnet, daß jede Walze jedes Paares konvex ist.

28. Einrichtung nach Anspruch 2, dadurch gekennzeichnet daß die Walzenflächen der Walzen jedes Paares ein balliges Profil haben, das so festgelegt ist, daß die Bandlänge der einzelnen Längselemente in dem Band optimiert ist, wobei die variablen Walzendurchmesser jedes Elementes, der vertikale Abstand der Biegewalzenpaare, der Biegewinkel des Bandes und die Gleichgewichts-Walzeneinstellpositionen längs der Bewegungsrichtung des Bandes beim Ausgleich der relativen Schwenkbewegung der Walzen jedes Walzenpaares berücksichtigt sind.

29. Einrichtung nach Anspruch 1 oder 2, dadurch gekennzeichnet, daß wenigstens eine der Walzen jedes Paares konvex ist.

30. Verfahren zum Ausgleichen der Summe der Querkomponenten der Spannungskräfte in einem endlosen Förderband an der linken Seite des Bandes mit der Summe der Querkomponenten der Spannungskräfte an der rechten Seite des Bandes, wenn das Band an einer Bandwinkelstelle abrupt um einen horizontalen Winkel verschwenkt ist, wobei ein erstes Paar vertikal beabstandeter Bandbiegewalzen und eine zweites Paar vertikal beabstandeter Bandbiegewalzen angeordnet sind und eine Walze jedes Paares an einem ersten stationären Rahmen und die jeweils andere Walze an einem zweiten Rahmen befestigt sind, der gegenüber dem ersten Rahmen horizontal abgewinkelt ist, dadurch gekennzeichnet, daß die Bandlänge jedes einzelnen Längsabschnitts, der die Walzen durchläft, durch Einstellen des Abstandes zwischen den Walzenaußenflächen der Walzen jedes Paares längs der Bewegungsrichtung des Bandes gesteuert wird, wodurch ein stabiler Bandzug erreicht und eine unerwünschte Spannungsverteilung vermieden wird.

**Revendications**

1. Ensemble de guidage de courroie comprenant une première paire de rouleaux de déviation de courroie, distants verticalement, et une seconde paire de rouleaux de déviation de courroie, distants verticalement, une courroie sans fin passant sur les paires de rouleaux, un rouleau de chaque paire étant monté sur un premier châssis statique et l'autre rouleau de chaque paire étant monté sur un second châssis qui peut pivoter horizontalement par rapport au premier châssis, et un dispositif destiné à faire varier la distance comprise entre les surfaces externes des rouleaux de chaque paire, longitudinalement dans la direction de déplacement de la courroie sans fin afin que le pivotement relatif des rouleaux de chaque paire soit compensé par équilibrage de la somme des composantes transversales des forces de tension régnant dans la courroie du côté gauche de celle-ci par la somme des composantes transversales des forces de tension régnant dans la courroie du côté droit de celle-ci.

2. Ensemble selon la revendication 1, dans lequel le dispositif destiné à faire varier la distance comprise entre les surfaces externes des rouleaux de chaque paire comporte un dispositif destiné à monter l'un ou l'autre rouleau au moins des paires de rouleaux afin qu'il puisse être déplacé de manière réglable longitudinalement dans la direction de déplacement de la courroie, et un dispositif de réglage des rouleaux mobiles.

3. Ensemble selon la revendication 2, dans lequel chacun des rouleaux de chaque paire est réglable longitudinalement par rapport à la courroie.

4. Ensemble selon la revendication 2 ou 3, dans lequel le dispositif de réglage est destiné à régler chaque rouleau de chaque paire afin que les rouleaux s'éloignent ou se rapprochement l'un de l'autre de quantités égales.

5. Ensemble selon l'une quelconque des revendications 2 à 4, dans lequel chaque rouleau de chaque paire a une configuration convexe ayant un rapport d'environ 3/1 entre le diamètre maximal et le diamètre minimal et un rapport d'environ 5/1 entre la longueur et le diamètre maximal.

6. Ensemble selon la revendication 5, dans lequel l'un au moins des rouleaux de chaque paire est segmenté.

7. Ensemble selon l'une quelconque des revendications 1 à 5, dans lequel chaque rouleau de chaque paire est un rouleau convexe segmenté.

8. Ensemble selon l'une quelconque des revendications 2 à 6, dans lequel la distance verticale séparant les centres des rouleaux de la paire est de l'ordre de deux fois le diamètre maximal des rouleaux.

9. Ensemble selon l'une quelconque des revendications 1 à 8, dans lequel le châssis statique et le second châssis sont construits comme un tout et sont montés de manière qu'ils se déplacent comme un tout.

10. Ensemble selon la revendication 9, dans lequel un dispositif à goulotte est disposé de manière qu'il chevauche les châssis.

11. Plusieurs ensembles de guidage de courroie selon la revendication 1, combinés à un concasseur semi-mobile de fouille destiné à fonctionner dans une mine à ciel ouvert.

12. Ensemble selon la revendication 1, dans lequel un rouleau inférieur de chacune des paires de rouleaux est monté sur le châssis statique et un rouleau supérieur de chacune des paires de rouleaux est monté sur le châssis pivotant.

13. Ensemble selon la revendication 1, dans lequel un rouleau supérieur de chacun des paires de rouleaux est monté sur le châssis statique et un rouleau inférieur de chacune des paires de rouleaux est monté sur le châssis pivotant.

14. Ensemble selon la revendication 1, dans lequel un rouleau supérieur de la première paire de rouleaux et un rouleau inférieur de la seconde paire de rouleaux sont montés sur le châssis pivotant, et un rouleau inférieur de la première paire de rouleaux et un rouleau supérieur de la seconde paire de rouleaux sont montés sur le châssis statique.

15. Ensemble selon la revendication 1, dans lequel un rouleau inférieur de la paire supérieure de rouleaux et un rouleau supérieur de la paire inférieure de rouleaux sont montés sur le châssis pivotant, et un rouleau supérieur de la paire supérieure de rouleaux et un rouleau inférieur de la paire inférieure de rouleaux sont montés sur le châssis statique.

16. Ensemble selon la revendication 1, dans lequel la paire supérieure de rouleaux et la paire inférieure de rouleaux sont montées sur les châssis de manière qu'elles se recouvrent en direction verticale par rapport à la courroie.

17. Ensemble selon la revendication 2, comprenant un châssis supplémentaire pouvant pivoter horizontalement par rapport au premier châssis et placé à une extrémité du châssis statique qui est distante du second châssis dans la direction de déplacement de la courroie, et un jeu supplémentaire d'une première et d'une seconde paire de rouleaux de déviation de courroie, distants verticalement, un rouleau de chaque paire du jeu supplémentaire étant monté sur le châssis statique et l'autre rouleau de chaque paire du jeu supplémentaire de rouleaux étant monté sur le châssis supplémentaire, un rouleau au moins de chacune des paires du jeu supplémentaire étant monté de manière qu'il puisse être déplacé de manière réglable longitudinalement dans la direction de déplacement de la courroie afin que le mouvement relatif de pivotement des rouleaux de chacune des paires du jeu supplémentaire soit compensé de manière analogue.

18. Ensemble selon la revendication 1, dans lequel le dispositif destiné à faire varier la distance comprise entre les surface externes des rouleaux de chaque paire longitudinalement dans la direction de déplacement de la courroie comporte un dispositif destiné à augmenter et réduire le diamètre externe d'au moins un rouleau de chaque paire de rouleaux.

19. Ensemble selon la revendication 18, dans lequel un dispositif est destiné à augmenter et réduire le diamètre externe de chaque rouleau de chaque paire.

20. Plusieurs ensembles de guidage de courroie selon la revendication 1, montés à distance les uns des autres sur une volée de transporteur afin que le transporteur puisse tourner en suivant des segments inclinés de cercle, de spirale ou de courbe sinueuse.

21. Ensemble selon la revendication 1, comprenant un châssis supplémentaire pouvant pivoter horizontalement par rapport au premier châssis et placé à une extrémité du châssis statique qui est distance du second châssis dans la direction de déplacement de la courroie, et un jeu supplémentaire comprenant une première et une seconde paire de rouleaux de déviation de courroie, distants verticalement, un rouleau de chaque paire du jeu supplémentaire étant monté sur le châssis statique et l'autre rouleau de chaque paire du jeu supplémentaire étant monté sur le châssis supplémentaire, et un dispositif destiné à faire varier la différence entre les surfaces externes des rouleaux de chaque paire du jeu supplémentaire longitudinalement dans la direction de déplacement de la courroie afin que le pivotement relatif des rouleaux de chaque paire du second jeu de rouleaux soit compensé et permette la compensation analogue du pivotement relatif des rouleaux de chacune des paires du jeu supplémentaire.

22. Ensemble selon la revendication 1, comprenant un châssis supplémentaire destiné à pivoter horizontalement par rapport au second châssis et placé à une extrémité du second châssis qui est distante du premier châssis dans la direction de déplacement de la courroie, et un jeu supplémentaire d'une première et d'une seconde paire de rouleaux de déviation de courroie, distants verticalement, un rouleau de chaque paire du jeu supplémentaire étant monté sur le second châssis et l'autre rouleau de chaque paire du jeu supplémentaire de rouleaux étant monté sur la châssis supplémentaire, l'un au moins des rouleaux de chaque paire du jeu supplémentaire étant monté de manière qu'il puisse se déplacer de manière réglable longitudinalement dans la direction de déplacement de la courroie afin que la pivotement relatif des rouleaux dans chaque paire du jeu supplémentaire soit compensé de manière analogue.

23. Ensemble selon la revendication 1, comprenant un châssis supplémentaire destiné à pivoter horizontalement par rapport au second châssis et placé à une extrémité du second châssis qui est distante du premier châssis dans la direction de déplacement de la courroie, et un jeu supplémentaire d'une première et d'une seconde paire de rouleaux de déviation de courroie, distants verticalement, un rouleau de chaque paire du jeu supplémentaire étant monté dans le second châssis et l'autre rouleau de chaque paire du jeu supplémentaire étant monté sur le châssis supplémentaire, un dispositif étant destiné à faire varier la différence entre les surfaces externes des rouleaux de chaque paire du jeu supplémentaire, longitudinalement dans la direction de déplacement de la courroie afin que le pivotement relatif des rouleaux de chaque paire du second jeu soit compensé et que le pivotement relatif des rouleaux de chaque paire du jeu supplémentaire soit compensé de manière analogue.

24. Ensemble selon la revendication 12, comprenant en outre un dispositif à trémie placé sur le châssis pivotant en surplomb au-dessus du châssis fixe et un ensemble à poulies de transfert de matériau d'un brin entrant d'une courroie de transport, placé sur le châssis pivotant et alimentant le dispositif à trémie afin que le matériau transporté soit transféré vers le dispositif à trémie par ledit brin de courroie avant que le brin de courroie ne passe dans l'ensemble de guidage de courroie, le dispositif à goulotte de la trémie étant placé par rapport à un brin sortant de courroie de transport du matériau qui est un prolongement du brin entrant de courroie qui à passé dans l'ensemble de guidage, de manière que le matériau transporté soit renvoyé vers le brin de courroie de transport de matériau destiné au dispositif à trémie.

25. Arrangement selon la revendication 22, comprenant en outre un dispositif à trémie disposé au-dessus du premier et du second châssis et un ensemble à poulies de transfert du matériau d'un brin entrant de courroie de transport, placé sur le châssis supplémentaire et alimentant le dispositif à trémie afin que le matériau transporté soit transféré au dispositif à trémie à partir du brin de courroie avant le passage du brin de courroie dans l'ensemble de guidage de courroie, le dispositif à trémie étant placé, par rapport à un brin sortant de courroie de transport de matériau qui est un prolongement du brin entrant de courroie qui a passé dans l'ensemble de guidage, de manière que le matériau transporté soit renvoyé au brin de courroie de transport de matériau à partir du dispositif à trémie.

26. Ensemble selon la revendication 22, comprenant en outre un dispositif à chariot de déversement placé en amont de l'ensemble de déviation de courroie et en surplomb au-dessus du châssis supplémentaire, et en ensemble à poulies de transfert de matériau d'un brin entrant de courroie, placé sur le chariot de déversement et alimentant le dispositif à trémie afin que le matériau transporté soit transféré au dispositif à trémie à partir d'un brin de courroie de transport de matériau, si bien que le dispositif à trémie peut recevoir simultanement les matériaux transportés provenant d'un brin de courroie du chariot sur le châssis pivotant supplémentaire et du chariot de déversement.

27. Ensemble selon l'une quelconque des revendications 1, 2, 17 et 21, dans lequel chaque rouleau de chaque paire est convexe.

28. Ensemble selon la revendication 2, dans lequel les surfaces des rouleaux de chaque paire ont un profil bombé déterminé de manière que la longueur des trajets des éléments longitudinaux individuels de la courroie soit optimisée, compte tenu du diamètre variable des rouleaux à chaque élément, de l'espacement vertical des paires de rouleaux de déviation, de l'angle de déviation de la courroie et des positions de réglage des rouleaux à l'équilibre, longitudinalement dans la direction de déplacement de la courroie lors de la compensation du pivotement relatif des rouleaux de chaque paire de rouleaux de déviation.

29. Ensemble selon la revendication 1 ou 2, dans lequel l'un au moins des rouleaux de chaque paire est convexe.

30. Procédé d'équilibrage de la somme des composantes transversales des forces de tension régnant dans une courroie sans fin de transport du côté gauche de celle-ci par la somme des composantes transversales des forces de tension régnant dans la courroie de son côté droit, lorsque la courroie tourne d'un angle horizontal important à un poste d'inclinaison de courroie qui comporte une première paire de rouleaux de déviation de courroie, distants verticalement, et une seconde paire de rouleaux de déviation de courroie, distants verticalement, l'un des rouleaux de chaque paire étant monté sur un premier châssis statique et l'autre rouleau de chaque paire étant monté sur un second châssis incliné horizontalement par rapport au premier châssis, le procédé comprenant le réglage de la distance du trajet parcouru par les fibres longitudinales individuelles de la courroie passant sur les rouleaux par contrôle de la distance comprise entre les surfaces externes des rouleaux de chaque paire, longitudinalement dans la direction de déplacement de la courroie, afin qu'un entraînement stable de la courroie soit obtenu et qu'une distribution de contraintes indésirables soit évitée dans la courroie.

FIG. I

0 172 027

FIG. 2

FIG.3

FIG.4

3

FIG. 5

FIG.6

FIG.6a

5,6,8,9

5c

5b

5

a

b

c

0 172 027

FIG.7

FIG. 9

FIG. 8

FIG. 10

FIG. II

FIG. 12

FIG. 13

FIG. 14

8% TRUCK RAMP

28% CONVEYOR RAMP

8% TRUCK RAMP

CONVEYOR DRIVE

FIG. 15

MATERIAL FLOW

FIG. 16

0 172 027

FIG.17

MATERIAL FLOW

2

1

5

6

MATERIAL FLOW

9

8

FIG.18

FIG. 19

FIG. 20

FIG. 21

FIG. 22

FIG. 23

0 172 027

FIG.24

FIG. 25

FIG. 26